# EUROPEAN PATENT APPLICATION

(11) **EP 1 145 806 A2**
(43) Date of publication of application: **17.10.2001**
(21) Application number: 01201253.0
(22) Date of filing: 05.04.2001
(51) Int. Cl.: B25J 17/02

(54) **"Parallel manipulator with isotropic behaviour and purely translational movement of the platform"**

(30) Priority: 12.04.2000 IT MI000798
(71) Applicant: CONSIGLIO NAZIONALE DELLE RICERCHE, 00185 Roma (IT)
(72) Inventor: Molinari Tosatti, Lorenzo, 20144 Milano (IT); Fassi, Irene, 24129 Bergamo (IT); Bianchi, Giacomo, 20139 Milano (IT); Negri, Simone, 21019 Somma Lombardo (VA) (IT); Di Bernardo, Giovanni, 20033 Desio (MI) (IT)
(74) Representative: Mittler, Enrico

(57) **Abstract**

The present invention concerns a 3-DOF parallel manipulator (parallel manipulator with three degrees of freedom) comprising a fixed frame (3), three legs (6, 7, 9) of variable length connected to the frame (3), movement means (14) that control the elongation and shortening of said legs (6, 7, 9), a moving platform (8) on which the three legs (6, 7, 9) converge to ensure translation movement in a workspace volume of the platform (8), joints (10, 11) for the connection of the legs (6, 7, 9) to the frame (3) and to the moving platform (8). The joints (10, 11) are positioned so that the three legs (6, 7, 9) are orthogonal to each other in at least one point of the workspace volume of the platform (8).

## Description

The present invention refers to a parallel manipulator with three degrees of freedom and the relative operating method.

3-DOF parallel kinematics machines with rotational and translational movements are known in the state of the art.

A parallel kinematics machine with three translational degrees of freedom is known as the "Tsai platform". Said machine comprises a fixed frame to which three variable length legs are connected, generally consisting of telescopic means. The three legs converge to a moving platform and are connected to it. The legs are fixed to the frame and to the platform by means of universal joints which permit the orientation of each leg in space but they block its rotation in relation to its own axis. By suitably varying the length of the legs, the moving platform is given purely translational movement. In this manner the platform can move on a support of the objects that have to be manipulated, that is on the so-called work surface. A machine of the above mentioned type is described in Di Gregorio R., Parenti-Castelli V., "Influence of Leg Flexibility on the Kinetostatic Behaviour of a 3-DOF Fully-Parallel Manipulator", Tenth World Congress on the theory of Machines and Mechanisms, vol. 3, 99.

A machine of the above mentioned type however does not permit optimum initial positioning of the platform on the work surface, as it does not permit both the working and inertial stress as is any direction to which the platform is submitted to distribute uniformly.

In view of the state of the art described, the object of the present invention is to provide a 3-DOF parallel manipulator which solves the above mentioned inconvenience.

According to the present invention, said object is reached by means of a parallel manipulator with three degrees of freedom comprising a fixed frame, three legs of variable length connected to the frame, movement means that control the elongation and shortening of said legs, a moving platform on which said three legs converge to ensure translational movement in a work volume of the platform, joints for the connection of said legs to said frame and to said moving platform, characterized in that said joints are positioned so that said three legs are orthogonal to each other in at least one point of said work volume of the platform.

In addition, still according to the present invention an operating method can be realized according to claim 6.

Thanks to the present invention a 3-DOF parallel manipulator can be realized which permits optimal initial positioning of the moving platform, evenly distributing the any-direction inertial and working stresses on the legs.

The characteristics and advantages of the present invention will be evident from the following detailed description of an embodiment thereof, illustrated as non-limiting example in the enclosed drawings, in which:
Figure 1 is a side view of a manipulator according to the present invention;
Figure 2 is a front view of a part of the manipulator in Figure 1;
Figure 3 is a partially sectioned view of a telescopic arm of the manipulator in Figure 1.

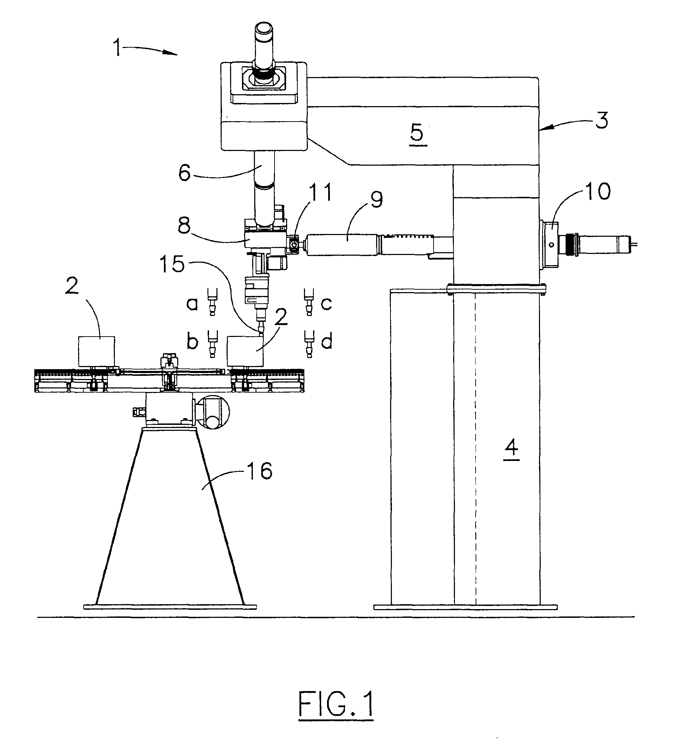

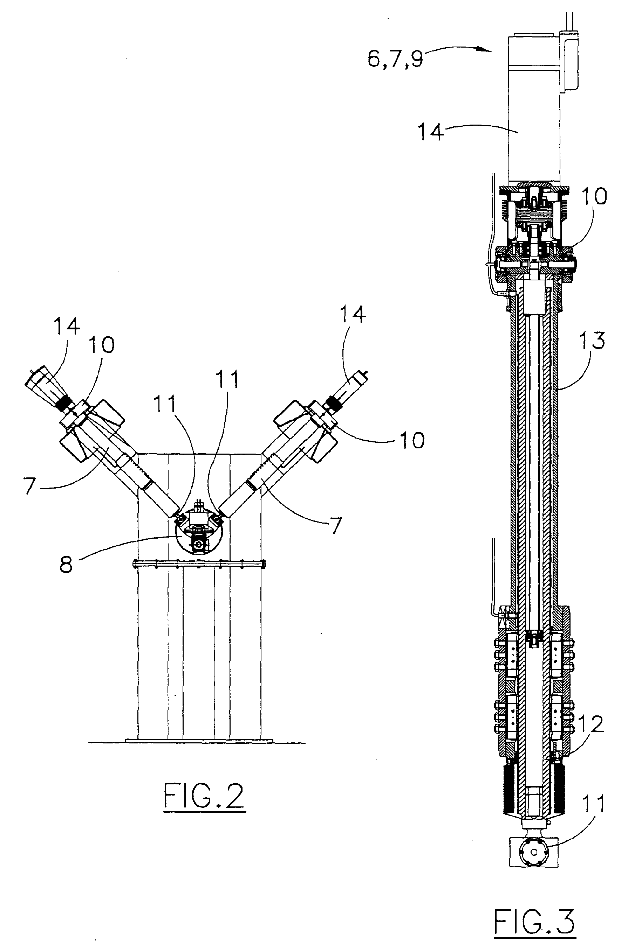

With reference to Figures 1 and 2 a manipulator 1 according to the present invention is shown, used as an example for working objects 2, carried by a fixed support 16. Said manipulator is formed of a fixed frame 3 formed of a vertical part 4 and an upper horizontal part 5. The latter is connected with two legs of variable length, for example telescopic legs 6, 7 converging on a moving platform 8, which supports a tool 15. A third telescopic leg 9 also converges on said moving platform 8 and is connected to a fixed frame 3 in a basically central zone of the vertical part 4. The telescopic legs 6, 7, 9 are connected to the frame 3 by means of first universal joints 10 and to the platform 8 by means of second universal joints 11. Said universal joints 10, 11 permit legs 6, 7, 9 to be orientated in space but they block their rotation in relation to their own axis. The telescopic legs 6, 7, 9 are formed of a moving tubular part 12 and of a fixed tubular part 13, better visible in Figure 3 where only one telescopic leg is shown; part 12 can enter and slide out of the fixed part 13 by means of movement means 14. The legs 6, 7, 9 converge on platform 8 and the variation of their length together with the arrangement of the joints 10, 11 permit purely translational movement of platform 8.

Manipulator 1 is described in the Figures in an initial working position in which leg 9 is placed orthogonally to legs 6, 7 which are placed orthogonally to each other. Indicating the points that can be reached in the space from a point placed in the centre of the moving platform 8 as "work volume" it is done so that the point at which the three legs 6, 7, 9 are mutually orthogonal is inside the work volume. In this manner the legs 6, 7, 9 guarantee isotropic behaviour of the moving platform 8 to both the inertial and working stresses. The angles formed by the legs 6, 7, 9 can be between 70° and 110° so that the tool 15, carried by the moving platform 8, can position itself at the points marked with a, b, c, d.

The three legs 6, 7, 9 are equal but the maximum length of one of the three legs 6, 7, 9 could be greater than that of the other two.

The orthogonality of one of the three legs 6, 7, 9 in relation to the others permits the use of smaller movement means 14 compared with those of a known manipulator.

Naturally the working tool and the piece to be worked can be exchanged and can be different from those described; for example to carry out electrical appliance assembly or other operations.

## Claims

1. A parallel manipulator with three degree of freedom comprising a fixed frame (3), three legs (6, 7, 9) of variable length connected to the frame (3), movement means (14) that control the elongation and shortening of said legs (6, 7, 9), a moving platform (8) on which converge said three legs (6, 7, 9) to ensure translational movement in a work volume of the platform (8), joints (10, 11) for connecting said legs (6, 7, 9) to said frame (3) and to said moving platform (8), **characterised in that** said joints (10, 11) are positioned so that said three legs (6, 7, 9) are orthogonal to each other in at least one point of said work volume of the platform (8).

2. Manipulator according to claim 1, **characterised in that** said joints (10, 11) by which each of said three legs (6, 7, 9) is connected to the fixed frame (3) and to the moving platform (8) are universal joints.

3. Manipulator according to claim 1, **characterised in that** each of said three legs (6, 7, 9) consists of a telescopic means.

4. Manipulator according to claim 1, **characterised in that** said three legs (6, 7, 9) are equal.

5. Manipulator according to claim 1, **characterised in that** one of said three legs (6, 7, 9) has a maximum length longer than the other two.

6. Operating method of a parallel manipulator with three degree of freedom, said manipulator (1) comprising a fixed frame (3), three legs (6, 7, 9) of variable length connected to the frame (3), movement means (14) that control the elongation and shortening of said legs (6, 7, 9), a moving platform (8) on which said three legs (6, 7, 9) converge, joints (10, 11) for the connection of said legs (6, 7, 9) with said frame (3) and with said moving platform (8), said method comprising the movement of said three legs (6, 7, 9) so as to ensure a translation movement to said moving platform (8), **characterised in that** it provides a work beginning movement of said moving platform (8) in which said three legs (6, 7, 9) are orthogonal to each other.

7. Method according to claim 6, **characterised in that** said joints (10, 11) by which each of said three legs (6, 7, 9) is connected with the fixed frame (3) and with the moving platform (8) are universal joints.

8. Method according to claim 6, **characterised in that** each of said three legs (6, 7, 9) comprises a telescopic means.

9. Method according to claim 6, **characterised in that** one of said three legs (6, 7, 9) has a maximum length greater than that of the other two.

10. Method according to claim 6, **characterised in that** said three legs (6, 7, 9) are equal.
